# EUROPÄISCHE PATENTSCHRIFT

(11) **EP 1 556 572 B1**
(45) Veröffentlichungstag und Bekanntmachung des Hinweises auf die Patenterteilung: **08.08.2007**
(21) Anmeldenummer: 03809246.6
(22) Anmeldetag: 17.10.2003
(51) Int. Cl.: E05F 15/20, E05F 15/14, E05F 15/16, B60J 7/057

(54) **KAPAZITIV MESSENDER SENSOR UND DETEKTIONSEINRICHTUNG MIT KAPAZITIVER SENSORIK ZUM DETEKTIEREN EINER EINKLEMMSITUATION**
SENSOR MEASURING BY CAPACITANCE AND DETECTION DEVICE WITH CAPACITIVE SENSORS FOR THE DETECTION OF A TRAPPING SITUATION
CAPTEUR A MESURE CAPACITIVE ET ENSEMBLE DE CAPTEURS CAPACITIFS POUR LA DETECTION D'UNE SITUATION DE COINCEMENT

(30) Priorität: 18.10.2002 DE 10248761
(43) Veröffentlichungstag der Anmeldung: 27.07.2005
(73) Patentinhaber: Wilhelm Karmann GmbH, 49084 Osnabrück (DE)
(72) Erfinder: GUTENDORF, Peter, 49088 Osnabrück (DE)
(86) Internationale Anmeldenummer: PCT/DE2003/003443
(87) Internationale Veröffentlichungsnummer: WO 2004/038149

(56) Entgegenhaltungen:
- EP-A- 0 910 718
- EP-B- 1 104 358
- WO-A-00/09355
- DE-A- 3 137 351
- DE-A- 3 527 405

## Beschreibung

Die Erfindung betrifft einen kapazitiv messenden Sensor mit einer Anordnung aus einer Mehrzahl von Elektroden auf einem Träger und mit Mitteln zur Messung einer Kapazität oder Kapazitätsänderung. Des weiteren betrifft die Erfindung eine Detektionseinrichtung mit einer kapazitiven Sensorik zum Detektieren eines Einklemmens von Gegenständen oder Körperteilen bei motorisch antreibbaren Vorrichtungen mit mehreren kapazitiv messenden Sensoren nach der Erfindung.

Bei motorisch antreibbaren Vorrichtungen besteht grundsätzlich die Gefahr eines Einklemmens von Gegenständen oder Körperteilen, wodurch die Gegenstände beschädigt oder Personen verletzt werden können. Im Zuge einer immer weiter verbreiterten Anwendung von motorisch antreibbaren Vorrichtungen zur Komforterhöhung, beispielsweise in der Gebäudetechnik bei Türen, Fenstern und Rolläden oder in der Kraftfahrzeugtechnik bei Fenstern, Schiebedächern und Cabrioletverdecken, gewinnt eine frühzeitige und sichere Erkennung einer Einklemmsituation zunehmend an Bedeutung, da der Bewegungsablauf derartiger Vorrichtungen häufig automatisiert ohne die Überwachung durch eine Bedienperson erfolgt.

So weisen Cabriolet-Kraftfahrzeuge neuerer Bauart häufig ein fahrbares Verdeck auf, welches beispielsweise durch eine Tasterbetätigung automatisch von einer geöffneten in eine geschlossene Position oder umgekehrt bewegt werden kann. Die Verdeckbewegung erfolgt dabei üblicherweise durch einen hydraulischen Antrieb, welcher einen Verdeckmechanismus antreibt, der ein Verdeckgestänge, unter dem vorliegend sowohl eine Trageinrichtung für ein Textildach als auch ein sogenanntes Hard-Top-Klappdach mit im wesentlichen starren Dachelementen zu verstehen ist, und gegebenenfalls einen Deckel für einen Verdeckaufnahmeraum sowie alle hierdurch bewegten Elemente umfaßt.

Des weiteren ist es bekannt, eine Detektionseinrichtung mit kapazitiven Sensoren zur Erkennung eines Eingriffs in den Bewegungsraum einer motorisch antreibbaren Vorrichtung, wie z. B. des Cabriolet-Verdecks, vorzusehen.

Ein solcher Einklemmschutz mit einer kapazitiven Sensorik wird in der deutschen Offenlegungsschrift DE 198 36 056 A1 beschrieben, wobei eine Anordnung zur Detektion von Hindernissen, insbesondere beim automatischen Schließen von Cabriolet-Verdecken, Kraftfahrzeug-Fenstern oder dergleichen, eine kapazitive Sensoreinrichtung umfaßt, bestehend aus einer elektrisch leitenden Senderfläche auf der einen Seite und einem elektrisch leitenden Sensordraht und mindestens einer im wesentlichen potentialfreien Metallfläche auf der anderen Seite eines Isolators. Die Senderfläche und der Sensordraht sind dabei an eine Auswerte-Schaltung angeschlossen.

Derartige mit einer kapazitiven Sensorik arbeitende Einklemmschutzeinrichtungen haben jedoch den Nachteil, daß sie einen verhältnismäßig großen Bauraum beanspruchen und somit nicht in allen sicherheitsrelevanten Bereichen eingesetzt werden können, so daß gegebenenfalls erst sehr spät bei Kontakt mit dem in den Bewegungsablauf eingreifenden Objekt eine Einklemmsituation detektiert und eine entsprechende Reaktion eingeleitet werden kann.

Aus der DE 101 04 331 A1 ist ein Cabriolet-Fahrzeug mit einem in einem Verdeckkasten ablegbaren Dach bekannt, wobei der Verdeckkasten in einem rückwärtigen Fahrzeugbereich an den Kofferraum angrenzend gelegen und gegenüber diesem durch eine variable Trennvorrichtung abteilbar ist, die einen Zusatzraum zumindest bereichsweise begrenzend zwischen einer Aufnahmestellung, in der der Verdeckkasten um den Zusatzraum vergrößert ist, und einer Gepäckaufnahmestellung, in der der Zusatzraum ein Teil des Kofferraums ausbildet, bewegbar ist, und wobei die Trennvorrichtung zumindest einen beweglichen Plattenkörper umfaßt.

Um ein Einklemmen von Gepäckstücken in dem Zusatzraum bei der Verdeckbewegung zu vermeiden, ist an dem Plattenkörper ein kapazitiver, mehrere flächige Folien umfassender Sensor angeordnet. Bei diesem Sensor sind zwei Folien bzw. Platten parallel zueinander angeordnet, wobei sich zwischen ihnen ein Dielektrikum befindet, das mechanisch unempfindlich und elastisch verformbar ist, wie z. B. Schaumstoff. Bei einem Kontakt des Sensors mit einem Gepäckstück erfolgt eine Deformation des Sensors und damit eine Veränderung des Abstandes zwischen den Folien bzw. Platten, welche als Kapazitätsänderung messbar ist.

Wenngleich ein solcher folienartiger Sensor den Vorteil hat, vergleichsweise flach zu sein, ist hier ein Kontakt des Sensors mit dem in dem Bewegungsablauf befindlichen Objekt erforderlich, womit auch bei dieser Lösung eine insbesondere für einen Einklemmschutz von menschlichen Körperteilen späte Reaktion erfolgt.

Ein weiterer kapazitiver Drucksensor, bei dem eine Kapazitätsänderung infolge einer Deformation von zwei beabstandet zueinander angeordneten Scheiben gemessen wird, ist aus der DE 40 11 901 A1 bekannt.

Im übrigen sind kapazitive Sensoren aus den deutschen Patentdokumenten DE 197 24 168 C1, DE 198 05 928 A1 und DE 32 36 056 A1 bekannt.

Es ist Aufgabe der vorliegenden Erfindung, einen kapazitiv messenden Sensor zu schaffen, der auch bei geringem zur Verfügung stehendem Einbauraum einsetzbar ist und eine berührungslose Detektion eines einklemmgefährdeten Objekts ermöglicht, sowie eine Detektionseinrichtung mit einer kapazitiven Sensorik bereitzustellen, mit der ein Eingriff in einen Bewegungsraum einer motorisch antreibbaren Vorrichtung in allen sicherheitsrelevanten Bereichen sicher und möglichst frühzeitig erkannt wird.

Erfindungsgemäß wird diese Aufgabe mit einem kapazitiv messenden Sensor nach den Merkmalen des Patentanspruches 1 und einer Detektionseinrichtung nach den Merkmalen des Patentanspruches 3 gelöst.

Der kapazitiv messende Sensor nach der Erfindung, welcher flächig und folienartig mit einem aus Folienmaterial gebildeten Träger zur Anordnung der Elektroden ausgebildet ist, wobei zur berührungslosen Detektion eines Gegenstands oder Körperteils die Elektroden auf einer Seite des Trägers angeordnet sind und Umgebungsluft das Dielektrikum bildet, hat den Vorteil, daß er nur einen äußerst geringen Bauraum beansprucht, aufgrund seiner Wellbarkeit in alle Richtungen auch in schwierigen Einbauräumen plazierbar ist und eine berührungslose Einklemmerkennung aufgrund einer Änderung des durch Luft gebildeten Dielektrikums ermöglicht, womit er sich besonders zur Detektion einer Einklemmsituation bei einer Verdeckbewegung eines Cabriolet-Verdecks eignet.

Eine erfindungsgemäße Detektionseinrichtung mit einer kapazitiven Sensorik zum Detektieren eines Einklemmens von Gegenständen oder Körperteilen bei motorisch antreibbaren Vorrichtungen mit mehreren kapazitiv messenden Sensoren nach der Erfindung hat den Vorteil, daß deutlich zwischen einer durch Umgebungsbedingungen verursachten Änderung der Kapazität aller Sensoren, z. B. aufgrund einer Veränderung der Luftfeuchtigkeit, und einer Veränderung der Kapazität aufgrund eines Eingriffs in den Bewegungsbereich der Vorrichtung mit einem Ansprechen nur einer Auswahl der verwendeten kapazitiv messenden Sensoren unterschieden werden kann. Das Vorliegen einer Einklemmsituation kann somit sicher erkannt werden.

Durch eine Auswertung der Dynamik der Kapazitätsänderung kann eine zusätzliche Erhöhung der Sicherheit des Ausgangssignals erreicht werden.

Bei der vorteilhaften Anwendung bei einem Verdeck eines Cabriolet-Kraftfahrzeugs werden die kapazitiv messenden Sensoren zweckmäßigerweise in kritischen Bereichen des Verdeckbewegungsablaufs angeordnet, so z. B. im Bereich scharnierartig verbundener Elemente des Verdeckgestänges und/oder eines Spannbügels und/oder eins Verdeckaufnahmeraumdeckels und/oder an einem Windschutzscheibenrahmen und/oder einem an Fenster angrenzenden Bereich. Dabei ist insbesondere eine platzsparende Anordnung zwischen einem Dichtungsprofil und/oder einem Verkleidungsteil und dessen Auflage vorteilhaft.

Um einen sicheren Einklemmschutz auch noch zu gewährleisten, wenn eine nach einem bestimmten Meßprinzip arbeitende Sensorik gestört ist oder eine Einklemmsituation nicht oder nicht rechtzeitig erkannt wird, ist es vorteilhaft, wenn die kapazitive Sensorik der erfin dungsgemäßen Detektionseinrichtung zur Erkennung eines Eingriffs in einen Bewegungsraum des Verdeckmechanismus mit einer nach einem anderen Meßprinzip messenden Sensorik zusammenwirkt, wobei nach Erkennen einer Störung der Detektionseinrichtung oder nach Erkennen einer Einklemmsituation die Verdeckbewegung über eine Steuereinrichtung in einem Sicherheitsmodus gesteuert wird. Der Übergang in den Sicherheitsmodus bei der Ansteuerung des Verdeckmechanismus, unter dem vorliegend ein Verdeckgestänge und gegebenenfalls ein Verdeckaufnahmeraumdeckel mit zugehörigen bewegten Elementen verstanden wird, gewährleistet dabei eine der jeweiligen Betriebssituation angepaßte Reaktion, welche in einem Fortfahren der Verdeckbewegung mit reduzierter Geschwindigkeit oder einem Stoppen oder Reversieren der Verdeckbewegung bestehen kann.

Als weitere nach einem anderen Meßprinzip arbeitende Sensorik kann beispielsweise eine optische Sensorik Anwendung finden.

Weitere Vorteile und vorteilhafte Ausgestaltungen der Erfindung sind der Beschreibung, der Zeichnung und den Patentansprüchen entnehmbar.

Ein Ausführungsbeispiel der Erfindung ist in der Zeichnung schematisch vereinfacht dargestellt und wird in der nachfolgenden Beschreibung näher erläutert.

Es zeigt:
- Fig. 1: eine schematisierte Ansicht eines Verdecks eines Cabriolet-Kraftfahrzeugs in Alleinstellung;
- Fig. 2: eine Prinzipskizze eines Aufbaus einer kapazitiven Senorik einer Detektionseinrichtung; und
- Fig. 3: eine Ablaufdiagramm eines Normalmodus und eines Sicherheitsmodus zur Steuerung einer Verdeckbewegung mit Hilfe der kapazitiven Sensorik.

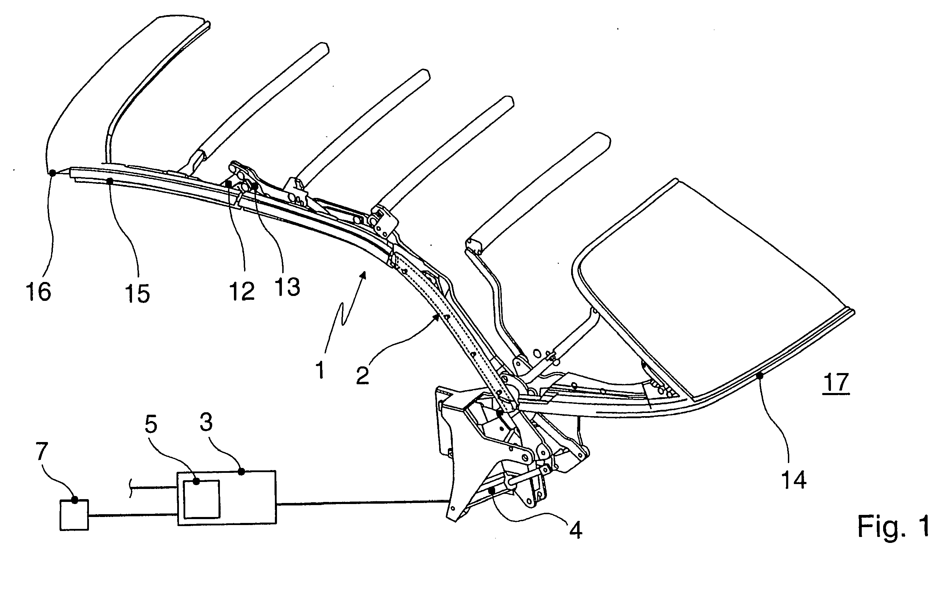

Die Figur 1 zeigt ein fahrbares Verdeck 1 eines Cabriolet-Kraftfahrzeugs, wobei das Verdeck 1 einen Verdeckmechanismus 2 umfaßt, der durch eine ein Verdecksteuergerät darstellende Steuereinrichtung 3 und einen in Figur 1 nur ausschnittsweise dargestellten elektro-hydraulischen Verdeckantrieb 4 zwischen einer geöffneten und einer geschlossenen Stellung bewegbar ist.

Um die automatische Verdeckbewegung ohne Beteiligung eines Kraftfahrzeugbenutzers und ohne dessen Beobachtung sicher durchführen zu können, ist eine automatische Detektionseinrichtung 5 zur Erkennung eines Eingriffs in einen Bewegungsraum des Verdeckmechanismus 2 vorgesehen, welche bezüglich ihrer Auswerteeinheit vorliegend in das Verdecksteuergerät 3 integriert ist.

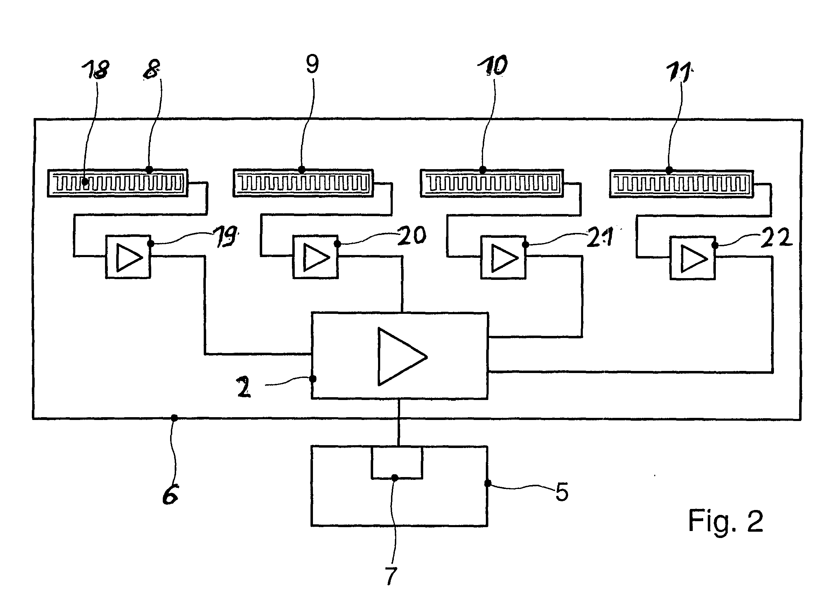

Die Detektionseinrichtung 5 weist eine Sensorik mit nach unterschiedlichen Meßprinzipien messenden Sensoren auf, wobei ein Teil der Sensorik als kapazitive Sensorik 6 ausgebildet ist, wie sie in Figur 2 gezeigt ist.

Die vorgestellte kapazitive Sensorik 6 ermöglicht eine berührungslose Einklemmerkennung und eignet sich somit in besonderer Weise als Bestandteil eines Multisensor-Systems, wie der Sensorik der Detektionseinrichtung 5, welche neben der kapazitiven Sensorik 6 vorliegend auch eine nur symbolisch in Figur 2 dargestellte optische Sensorik 7 aufweist.

In Figur 2 ist prinzipmäßig ein Aufbau der kapazitiven Sensorik 6 gezeigt, welche mit mehreren kapazitiv messenden Sensoren ausgebildet ist, von denen eine Auswahl mit den kapazitiven Sensoren 8, 9, 10 und 11 in Figur 2 gezeigt ist.

Die kapazitiven Sensoren 8 bis 11 sind bei der gezeigten Ausführung jeweils in einem kritischen Bereich des Verdeckmechanismus 2 angeordnet, wie z. B. in einem in der Figur 1 gezeigten Bereich scharnierartig verbundener Elemente 12, 13 eines Verdeckgestänges, eines Spannbügels 14, einem an Fenster angrenzenden Bereich 15, einem Anlagebereich 16 an einen Windschutzscheibenrahmen und in einem Anlagebereich für einen Verdeckaufnahmeraumdeckel dessen Anordnungsbereich in Figur 1 mit dem Bezugszeichen 17 angedeutet ist.

Wie in der Figur 2 schematisch gezeigt ist, ist ein jeder kapazitiver Sensor 8 bis 11 vorliegend als ein flächiger, folienartiger Sensor ausgebildet, bei dem Elektroden 18 auf einem Träger aus Folienmaterial angeordnet sind. Die spezielle Struktur der Leiterbahnen auf dieser Folie ergibt jeweils einen kapazitiven Aufnehmer, der einseitig auf eine Änderung des Dielektrikums, welches bei den kapazitiven Sensoren 8 bis 11 Luft ist, reagiert. Bei einer Annäherung eines Gegenstandes oder eines Körperteils ändert sich somit die Kapazität, die in einer integrierten Elektronik zur Weiterverarbeitung in der Steuereinrichtung 3 des Verdecks 1 in ein analoges Spannungssignal umgewandelt wird.

Wie der Figur 2 zu entnehmen ist, sind die folienartig ausgebildeten Sensoren 8 bis 11 jeweils über einen Verstärker bzw. Transistor 19, 20, 21, 22 mit dem Verdecksteuergerät 3 verbunden, wobei zwischen den Transistoren 19 bis 22 und dem Verdecksteuergerät 3 bei der gezeigten Ausführung ein sich automatisch nachregelnder Verstärker 23 vorgesehen ist. Der sich nachregelnde Verstärker 23 bewirkt beispielsweise bei stark erhöhter Luftfeuchtigkeit der Umgebung, wie z. B. einer Auflage von Schnee, eine Verschiebung des Nullpunkts aller Sensoren, so daß z. B. durch den Schnee hindurch ein Körperteil, wie beispielsweise ein Finger, erkannt werden kann. Die den einzelnen kapazitiven Sensoren 8 bis 11 zugeordneten Verstärker 19 bis 22 sind ebenfalls auf einem Folienmaterial angeordnet.

Die kapazitiven Sensorfolien 8 bis 11, die nach Möglichkeit zwischen Dichtungen oder Verkleidungsteilen des Verdeckmechanismus 2 und deren Auflage angebracht sind, erkennen einen Fremdkörper in einem Abstand von beispielsweise bis zu 60 mm.

Um Fehlauslösungen aufgrund äußerer Einflüsse auszuschließen, werden die verwendeten Sensoren 8 bis 11 untereinander abgeglichen und ihre Signale von der zugehörigen Auswerteeinrichtung der Detektionseinrichtung 5 bzw. des Verdecksteuergerätes 3 auf Plausibilität geprüft. So wird bei einer Kapazitätsänderung aller kapazitiver Sensoren von einer Änderung der Umgebungseinflüsse ausgegangen, während bei einer Änderung der Kapazität bei nur einer Auswahl der kapazitiven Sensoren eine Einklemmsituation erkannt wird.

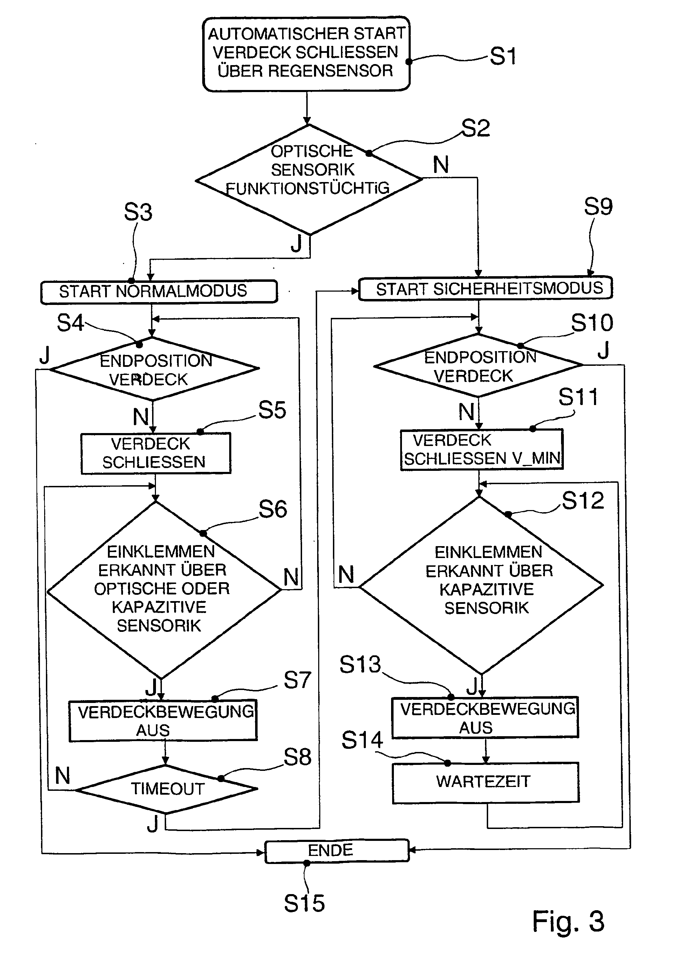

Sobald eine Störung der Detektionseinrichtung 5 erkannt wird oder die vorbeschriebene Sensorik eine Einklemmsituation bei der Verdeckbewegung detektiert, wird die Verdeckbewegung in einem in Figur 3 näher gezeigten Sicherheitsmodus gesteuert, in dem die Verdeckbewegung mit reduzierter Geschwindigkeit und Kraft fortgesetzt, stillgesetzt oder ganz oder teilweise reversiert wird.

Wie dem Ablaufdiagramm in Figur 3 zu entnehmen ist, wird hier in einem ersten Schritt S1 ein automatischer Start der Verdeckbewegung zum Schließen des Verdecks 1 ausgelöst, wenn von einem Regensensor eine definierte Wassermenge detektiert wird.

Nach dem Start der automatischen Verdeckbewegung wird in einem weiteren Schritt S2 geprüft, ob die vorliegende optische Sensorik 7 funktiontüchtig ist. Wenn dies zutrifft, wird eine Verarbeitungsfunktion S3 für einen Normalmodus gestartet, in dem der Verdeckmechanismus 2 mit größtmöglicher Kraft und Geschwindigkeit angetrieben wird.

Dabei wird in einer Abfragefunktion S4 ständig abgefragt, ob das Verdeck 1 bereits seine Endposition erreicht hat. Falls dies der Fall ist, wird in eine die Überwachungsfunktion beendende Verarbeitungsfunktion S15 verzweigt, ansonsten wird das Verdeck 1 über eine weitere Verarbeitungsfunktion S5 weiterhin in seiner Schließbewegung gehalten, wobei während der Bewegung permanent in einer Abfragefunktion S6 überprüft wird, ob ein Einklemmen über die optische oder kapazitive oder sonstige Sensorik erkannt wird.

Bei einem positiven Abfrageergebnis der Abfragefunktion S6, d. h. bei Erkennen einer Einklemmsituation, wird die Verdeckbewegung in einer nachfolgenden Verarbeitungsfunktion S7 zunächst gestoppt und eine Wartezeit gestartet. In einer auch "Timeout"-Funktion genannten Abfragefunktion S8 wird während des Stillstandes der Verdeckbewegung abgefragt, ob die Einklemmsituation weiterhin besteht.

Falls die Einklemmsituation nicht weiter gegeben ist, wird zurückverzweigt zur Abfragefunktion S4, in der überprüft wird, ob die Endposition des Verdecks 1 erreicht ist, ansonsten wird die Verdeckbewegung über die Funktion S5 weiter zugelassen.

Falls nach Ablauf der Wartezeit bei gestoppter Verdeckbewegung die Abfragefunktion S8 ergibt, daß die Einklemmsituation weiterhin besteht, wird mit einer Verarbeitungsfunktion S9 ein Sicherheitsmodus gestartet. Dieser Sicherheitsmodus wird ebenfalls gestartet, wenn unmittelbar nach Start der automatischen Verdeckbewegung in der Abfragefunktion S2 erkannt wird, daß die optische Sensorik 7 nicht funktionstüchtig ist.

Nach Start des Sicherheitsmodus wird wie in dem Normalmodus zunächst in einer Abfragefunktion S10 überprüft, ob das Verdeck 1 seine Endposition erreicht hat. Falls dies bereits der Fall ist, wird zu der die Überwachung beendenden Funktion S15 verzweigt. Andernfalls wird die Verdeckbewegung über eine Verarbeitungsfunktion S11 mit verminderter Geschwindigkeit v_min fortgesetzt, wobei während dieser verlangsamten Verdeckbewegung anhand einer Abfragefunktion S12 überprüft wird, ob eine Einklemmsituation über die kapazitive Sensorik 6 erkannt wird. Wenn dies nicht der Fall ist, wird zur Abfragefunktion S10 zurückverzweigt und das Verdeck mit verminderter Geschwindigkeit bis zum Erreichen seiner Endposition geschlossen.

Falls in der Abfragefunktion S12 in dem Sicherheitsmodus eine Einklemmsituation erkannt wird, wird die Verdeckbewegung in einer Verarbeitungsfunktion S13 je nach Schwere der Einklemmsituation gestoppt oder reversiert, wobei in einem weiteren Schritt S14 eine Wartezeit gestartet wird, während der überprüft wird, ob die Einklemmsituation weiterhin besteht. Solange dies der Fall ist, bleibt die Verdeckbewegung gestoppt oder reversiert.

Mit Hilfe des Sicherheitsmodus wird ausgeschlossen, daß aufgrund eines Einfachfehlers die Automatikfunktion der Verdeckbewegung nicht gestartet wird und dadurch das Fahrzeug gegebenenfalls beschädigt wird. Andererseits wird bei einer eindeutigen Einklemmsituation sofort eine angemessene Reaktion eingeleitet.

Es versteht sich, daß der vorgestellte kapazitiv messende Sensor ein beliebige, für den jeweiligen Anwendungsfall geeignete Anordnung von Elektroden aufweisen kann und die kapazitive Sensorik mit entsprechenden Modifikationen bei zahlreichen anderen Anwendungsfällen beispielsweise in der Gebäudetechnik oder der Kraftfahrzeugtechnik zum Einsatz kommen kann.

## Patentansprüche

1. Kapazitiv messender Sensor (8-11), insbesondere zum Detektieren eines Einklemmens von Gegenständen oder Körperteilen bei motorisch antreibbaren Vorrichtungen, mit einer Anordnung aus einer Mehrzahl von Elektroden (18) auf einem Träger und mit Mitteln zur Messung einer Kapazität oder Kapazitätsänderung, wobei der Sensor (8-11) flächig und folienartig mit einem aus Folienmaterial gebildeten Träger zur Anordnung der Elektroden (18) ausgebildet ist, **dadurch gekennzeichnet, daß** zur berührungslosen Detektion eines Gegenstands oder Körperteils die Elektroden (18) auf einer Seite des Trägers angeordnet sind und Umgebungsluft das Dielektrikum bildet.

2. Sensor nach Anspruch 1, **dadurch gekennzeichnet, daß** er mit einem automatisch nachregelnden Schwellwertschalter (23) verbunden ist.

3. Detektionseinrichtung mit einer kapazitiven Sensorik zum Detektieren eines Einklemmens von Gegenständen oder Körperteilen bei motorisch antreibbaren Vorrichtungen,
**dadurch gekennzeichnet daß** die kapazitive Sensorik (6) mehrere Sensoren (8 - 11) nach einem der Ansprüche 1 oder 2 aufweist.

4. Detektionseinrichtung nach Anspruch 3, **dadurch gekennzeichnet , daß** bei einem Ansprechen einer Auswahl mehrerer der Sensoren (8 - 11), insbesondere zweier benachbarter Sensoren (8 - 11), eine Einklemmsituation erkannt wird.

5. Detektionseinrichtung nach Anspruch 3 oder 4, **dadurch gekennzeichnet , daß** die motorisch antreibbare Vorrichtung zum Detektieren eines Einklemmens von Gegenständen oder Körperteilen als ein Verdeck (1) eines Cabriolet-Kraftfahrzeugs ausgebildet ist.

6. Detektionseinrichtung nach Anspruch 5, **dadurch gekennzeichnet , daß** Sensoren (8 - 11) im Bereich scharnierartig verbundener Elemente (12, 13) eines Verdeckgestänges und/oder eines Spannbügels (14) und/oder eines Verdeckaufnahmeraumdeckels (17) und/oder an einem Windschutzscheibenrahmen (16) und/oder einem an ein Fenster angrenzenden Bereich (15) angeordnet sind.

7. Detektionseinrichtung nach Anspruch 5 oder 6, **dadurch gekennzeichnet, daß** Sensoren (8 - 11) zur Erkennung einer Einklemmsituation zwischen einem Dichtungsprofil und/oder Verkleidungsteil und dessen Auflage angeordnet sind.

8. Detektionseinrichtung nach einem der Ansprüche 5 bis 7,
**dadurch gekennzeichnet , daß** die kapazitive Sensorik (6) zur Erkennung eines Eingriffs in einen Bewegungsraum eines Verdeckmechanismus (2) mit einer nach einem anderen Meßprinzip messenden Sensorik (7) zusammenwirkt, wobei nach Erkennen einer Störung der Detektionseinrichtung (5) oder nach Erkennen einer Einklemmsituation die Verdeckbewegung über eine Steuereinrichtung (3) in einem Sicherheitsmodus (S9) gesteuert wird, in dem die Verdeckbewegung mit reduzierter Geschwindigkeit und Kraft fortgesetzt oder stillgesetzt oder reversiert wird.

9. Detektionseinrichtung nach Anspruch 8, **dadurch gekennzeichnet , daß** die kapazitive Sensorik (6) mit einer optischen Sensorik (7) zusammenwirkt.

10. Detektionseinrichtung nach Anspruch 9, **dadurch gekennzeichnet , daß** der Sicherheitsmodus (S9) gestartet wird, wenn eine Störung der optischen Sensorik (7) erkannt wird.

## Claims

1. A capacitively measuring sensor (8-11), particularly for detection of an obstruction of objects or body parts in motor driven devices, said sensor comprising an arrangement of a plurality of electrodes (18) on a support and means for measuring a capacitance or change in capacitance, the sensor (8-11) having a flat and film-like design with a support made from a sheet material for arranging the electrodes (18) thereon, **characterized in that**, in order to detect an object or body part in a contactless manner, the electrodes (18) are arranged on a side of the support and ambient air constitutes the dielectric.

2. A sensor according to claim 1, **characterized in that** it is connected to an automatically readjusting threshold switch (23).

3. A detection device comprising a capacitive sensor system for detection of an obstruction of objects or body parts in motor driven devices, **characterized in that** the capacitive sensor system (6) comprises a plurality of sensors (8-11) according to any one of claims 1 or 2.

4. A detection device according to claim 3, **characterized in that** an obstruction situation is detected when a selection of several of the sensors (8-11), in particular two adjacent sensors (8-11), are responding.

5. A detection device according to claim 3 or 4, **characterized in that** the motor driven device for detection of an obstruction of objects or body parts is provided as a convertible top (1) of a convertible motor vehicle.

6. A detection device according to claim 5, **characterized in that** sensors (8-11) are located in the area of elements (12, 13) that are connected with each other by hinge-like connections and that are elements of a convertible top linkage and/or a tensioning bow (14) and/or a convertible top compartment cover (17) and/or a windshield frame (16) and/or an area (15) adjacent to a window.

7. A detection device according to claim 5 or 6, **characterized in that** sensors (8-11) that are used to detect an obstruction situation are located between a sealing section and/or a trim part and its support.

8. A detection device according to any one of claims 5 to 7, **characterized in that** the capacitive sensor system (6) is interacting with a sensor system (7) that performs measurements based on a different measuring principle in order to detect an interference into a range of motion of a convertible top mechanism (2) wherein, after a malfunction of the detection device (5) or an obstruction situation is recognized, the convertible top motion is controlled by a control device (3) in a safety mode (S9), in which the convertible top motion continues with reduced speed and force or is stopped or reversed.

9. A detection device according to claim 8, **characterized in that** the capacitive sensor system (6) interacts with an optical sensor system (7).

10. A detection device according to claim 9, **characterized in that** the safety mode (S9) is started when a malfunction is recognized in the optical sensor system (7).

## Revendications

1. Capteur (8-11) de mesure capacitive plus particulièrement pour détecter le coincement d'objets ou de parties d'éléments dans des dispositifs pouvant être entraînés par un moteur, présentant un arrangement d'une pluralité d'électrodes (18) sur un support et des moyens de mesure d'une capacité ou d'une variation de capacité, capteur (8-11) plan et en feuille présentant un support en film pour la disposition des électrodes (18), **caractérisé en ce que** pour détecter sans contact un objet ou une partie d'un élément, les électrodes (18) sont disposées sur un côté du support et **en ce que** l'air ambiant constitue le diélectrique.

2. Capteur selon la revendication 1, **caractérisé en ce qu'**il est relié à un interrupteur de valeur de seuil (23) à réajustement automatique.

3. Dispositif de détection présentant un système de détection capacitive pour la détection du coincement d'objets ou de parties d'éléments dans des dispositifs pouvant être entraînés par un moteur, **caractérisé en ce que** le système de détection capacitive (6) présente plusieurs capteurs (8-11) selon l'une des revendications 1 ou 2.

4. Dispositif de détection selon la revendication 3, **caractérisé en ce que** lors de la réponse de plusieurs capteurs sélectionnés (8-11), plus particulièrement de deux capteurs adjacents (8-11), une situation de coincement est identifiée.

5. Dispositif de détection selon la revendication 3 ou 4, **caractérisé en ce que** le dispositif pouvant être entraîné par un moteur pour détecter un coincement d'objets ou de parties d'éléments est réalisé sous la forme d'une capote (1) de cabriolet automobile.

6. Dispositif de détection selon la revendication 5, **caractérisé en ce que** des capteurs (8-11) sont disposés dans la zone d'éléments (12,13) reliés entre eux de manière articulée de la timonerie d'une capote et/ou d'un étrier de tension (14) et/ou d'une couverture de toit à espace de réception de la capote (17) et/ou sur un cadre de pare-brise (16) et/ou dans une zone (15) contiguë à une fenêtre.

7. Dispositif de détection selon la revendication 5 ou 6, **caractérisé en ce que** des capteurs (8-11) de détection d'une situation de coincement sont disposés entre un profil d'étanchéité et/ou un élément de revêtement et le support de celui-ci.

8. Dispositif de détection selon l'une quelconque des revendications 5 à 7, **caractérisé en ce que** le système de détection capacitive (6) pour déterminer un engagement dans un espace de mouvement d'un mécanisme de capote (2) coopère avec un système de détection (7) mesurant selon un autre principe de mesure, dans lequel après identification d'une perturbation du dispositif de détection (5) ou après identification d'une situation de coincement le mouvement de la capote est commandé par un dispositif de commande (3) dans un mode sécurisé (S9), dans lequel le mouvement de la capote se poursuit selon une vitesse et une force réduites ou arrêté ou inversé.

9. Dispositif de détection selon la revendication 8, **caractérisé en ce que** le système de détection capacitive (6) coopère avec un système de détection optique (7).

10. Dispositif de détection selon la revendication 9, **caractérisé en ce que** le mode sécurisé (S9) est activé lorsqu'une perturbation du système de détection optique (7) est identifiée.
